Europäisches Patentamt

European Patent Office

Office européen des brevets

(19)

(11) Veröffentlichungsnummer: **0 210 426**
**B1**

(12) **EUROPÄISCHE PATENTSCHRIFT**

(45) Veröffentlichungstag der Patentschrift:
28.11.90

(51) Int. Cl.⁵: **G05G 5/00, A01B 63/111**

(21) Anmeldenummer: **86108488.7**

(22) Anmeldetag: **21.06.86**

(54) Fernbetätigungsvorrichtung.

(30) Priorität: **03.07.85 DE 3523762**

(43) Veröffentlichungstag der Anmeldung:
**04.02.87 Patentblatt 87/6**

(45) Bekanntmachung des Hinweises auf die Patenterteilung:
**28.11.90 Patentblatt 90/48**

(84) Benannte Vertragsstaaten:
**AT BE CH DE FR GB IT LI**

(56) Entgegenhaltungen:
**DE-A- 3 318 114**
**DE-A- 3 433 092**
**DE-C- 808 084**
**DE-U- 8 425 315**
**US-A- 3 117 465**
**US-A- 4 478 104**

(73) Patentinhaber: **DEERE & COMPANY, 1 John Deere Road, Moline, Illinois 61265(US)**

(72) Erfinder: **Zahn, Werner, Dipl.-Ing. (FH), Friedrichstrasse 30, D-6822 Altlussheim(DE)**

(74) Vertreter: **Feldmann, Bernhard, DEERE & COMPANY European Office, Patent Department Steubenstrasse 36-42 Postfach 503, D-6800 Mannheim 1(DE)**

## Beschreibung

Die Erfindung betrifft eine Fernbetätigungsvorrichtung mit einem Fernbetätigungshebel, einem Übertragungsglied und einem Mitnehmer gemäß dem Oberbegriff des Anspruchs 1.

Fernbetätigungsvorrichtung sind für die vielfältigsten Zwecke bekannt. So ist in der gattungsbildenden EP-A2-0 131 711 eine Fernbetätigungsvorrichtung für einen Hebel einer Dreipunktgerätekupplung eines Ackerschleppers beschrieben, die dazu benutzt wird, den in einer Fahrerkabine des Ackerschleppers angeordneten Hebel von außerhalb der Fahrerkabine zu verstellen, so daß zu der Dreipunktgerätekupplung gehörige untere Lenker angehoben oder abgesenkt werden können, ohne daß eine Bedienungsperson auf den Ackerschlepper aufsteigen muß. In einem derartigen Anwendungsfall ist jedoch zu berücksichtigen, daß, je nach Ausführung der Steuer- und Regelvorrichtung der Dreipunktgerätekupplung, der Hebel gegebenenfalls nur in einem bestimmten Bereich bewegt werden darf. Dies ist unter anderem davon abhängig, ob die Regelvorrichtung eine Lageregelung und eine Zugwiderstandsregelung durchführen kann oder nicht. Ausgehend von einer Bauart der Steuer- und Regelvorrichtung, bei der bei Wahl der Lageregelung der Hebel bei seiner Verstellung über den ganzen Bereich eine proportionale Bewegung der unteren Lenker bewirkt und bei Wahl der Zugwiderstandsregelung der Hebel bei seiner Verstellung in einem anfangs gelegenen Leerbereich keine und in einem daran anschließenden Regelbereich, sofern an dem unteren Lenker keine Zugbelastung herrscht, eine unkontrollierte Bewegung der unteren Lenker bewirkt, ist darauf zu achten, daß der Hebel nicht in den Regelbereich durch den Fernbetätigungshebel gebracht werden kann, wenn als Regelart die Zugwiderstandsregelung gewählt ist. Dieser Sicherheitsaspekt ist notwendig, um zu vermeiden, daß eine neben einem an den Ackerschlepper ansuhängenden Gerät stehende Person durch das unkontrollierte Anheben der unteren Lenker eine ungewollte Bewegung mit dem Gerät durchführt, durch welche sie verletzt oder das Gerät beschädigt wird. Bei dieser bekannten Fernbetätigungsvorrichtung ist der Mitnehmer als Zahnrad und das Übertragungsglied als Zahnstange mit einem Bowdenzug ausgebildet. Das Zahnrad ist nur auf einem Teil seines Umfanges mit Zähnen versehen und in einem Gehäuse drehbar gelagert. Es steht mit der Zahnstange grundsätzlich in Eingriff und kann mit dem Fernbetätigungshebel über eine einfache Zapfenverbindung entgegen der Wirkung eines Federelementes verbunden werden. Die Zahnstange nimmt die Form und die Funktion eines Schlittens ein, der in dem Gehäuse durch ein Verdrehen des Zahnrades längsverschiebbar ist und dabei den Bowdenzug verstellt. An dem Gehäuse sind zwei Anschläge vorgesehen, die den Schwenkbereich des Fernbetätigungshebels auf einen vorbestimmten Bereich, der dem Leerbereich entspricht, beschränken. In einer anderen Ausführungsform dieser Fernbetätigungsvorrichtung rastet eine Klinke in das Zahnrad ein, sobald die Zahnstange sich am Ende des Leerbereiches befindet. Die Klinke wird dann in einer speziellen Ausnehmung in dem Schlitten während dessen weiterer von dem Hebel ausgehender Verschiebung gehalten, so daß das Zahnrad weder vorwärts noch rückwärts gedreht werden kann.

Dieser Fernbetätigungsvorrichtung haftet der Nachteil an, daß die Zapfenverbindung umgangen werden kann, indem der Fernbetätigungshebel seitlich an den Zapfen angelegt wird und somit die Drehbewegung des Zahnrades der Schwenkbewegung des Fernbetätigungshebels voreilt und die Zahnstange über den vorbestimmten Bereich hinaus bewegt wird. Desgleichen kann der Fernbetätigungshebel auch reibschlüssig an das Zahnrad gedrückt werden und somit die Zahnstange über den vorbestimmten Bereich hinaus verschoben werden.

Zwar wird dieser Nachteil bei der Ausführung mit de Klinke vermieden. Der fertigungstechnische Aufwand zum Halten der Klinke in der das Zahnrad haltenden Stellung ist jedoch ungerechtfertigt hoch. Ferner kann nach langer Gebrauchszeit nicht ausgeschlossen werden, daß aufgrund einer rauhen Bedienungsweise und/oder von Verschleiß an dem Zahnrad, der Zahnstange und der Klinkenspitze dieses Gesperre nicht mehr richtig funktioniert und zu einer Blockage der Fernbetätigungsvorrichtung führt.

Allen diesen vorbeschriebenen und bekannten Ausführungen ist zudem gemein, daß bei einer unsachgemäßen Montage das Zahnrad gegenüber der Zahnstange versetzt werden kann, so daß gewollt oder ungewollt eine Verlagerung des gewollten Bereiches möglich ist.

Die der Erfindung zugrunde liegende Aufgabe wird darin gesehen, die Fernbetätigungsvorrichtung derart weiterzuentwickeln, daß deren Funktion sicherer wird.

Aus der US-A 4 478 104 ist ebenfalls eine Fernbetätigungsvorrichtung bekannt, die einen Hebel mit einem Stift und eine Zahnstange enthält. Der Hebel kann um eine Lagerstelle auf einem Kreisabschnitt und radial zu der Lagerstelle entgegen der Wirkung einer Feder bewegt werden. Eine radiale Bewegung nach außen bringt den Stift in Eingriff mit der Zahnstange, und eine Schwenkbewegung des Hebels führt über die Verbindung des Stifts mit der Zahnstange zu einer Längsbewegung der zuletzt genannten. Diese Fernbetätigungsvorrichtung ist insoweit nachteilig, als mit ihr die Zahnstange und somit die anderenends an ihr befestigte Steuervorrichtung über den gesamten Bereich bewegt werden können, was aus Sicherheitsgründen nicht geschehen darf.

Eine Fernbetätigungsvorrichtung nach der US-A 3 117 465 weist zwei Schlitten und eine mit einem Hebel verbundene Schwenkplatte auf, die über einen Stift und jeweils eine Gabel miteinander in Eingriff gelangen können. Während einer der Schlitten zum Wechsel der Fahrtrichtung dient, erfolgt mit dem anderen eine Verstellung der Drehzahl eines Motors. Sobald der Stift aus der Gabel austritt, kann der jeweilige Schlitten längs verschoben werden. Diese Fernbetätigungsvorrichtung ist daher nur anwendbar, wenn die mit den Schlitten verbundenen Teile nicht über externe Hebel oder dergleichen bewegt werden. Im Fall einer Fernbetätigungseinrichtung, die mit einer zweiten Hauptbetätigungseinrichtung gemeinsam auf ein Stellglied wirken soll, würde dies bedeuten, daß bei einer anderweitigen Verstellung des Stellglieds eine eindeutige räumliche Beziehung zwischen dem Hebel und den Schlitten nicht mehr gewährleistet wäre. Es sind vielmehr die gleichen Probleme wie mit der Fernbetätigungsvorrichtung nach der EP-A2 0 232 711 zu erwarten.

Diese Aufgabe ist gemäß der Erfindung durch die kennzeichnenden Merkmale des Anspruchs 1 gelöst worden.

Auf diese Weise kann der Mitnehmer stets nur in der gleichen Stellung mit dem Übertragungsglied verbunden werden, und eine Verlagerung des gewollten Betätigungsbereiches ist nicht möglich. Diese Maßnahme kann dadurch erreicht werden, daß der Mitnehmer und das Übertragungsglied nur in einer unter vielen möglichen Stellungen zusammenpassen oder daß nur eine einzige Verbindungsmöglichkeit besteht.

In den Unteransprüchen sind Merkmale genannt, die die Erfindung fortenwickeln und der Fernbetätigungsvorrichtung zusätzliche Vorteile verleihen.

So ist bereits eine einzige Ausnehmung in dem Schlitten, in die der federbelastete Mitnehmerstift einrückbar ist, ausreichend, um zu einer stets eindeutigen Verbindung des Mitnehmers mit dem Schlitten zu gelangen. Die Federbelastung sorgt für einen Formschluß und vermittelt beim Einrasten des Mitnehmerstiftes unter plötzlicher Entspannung der Druckfeder eine akustische und/oder spürbare Anzeige, daß ein Formschluß stattgefunden hat.

Der Fernbetätigungshebel kann gemeinsam mit dem Mitnehmer in jeder Stellung des Übertragungsgliedes und somit auch des Schlittens aus der Außerbetriebsstellung heraus auf den Schlitten und die in ihm vorgesehene Ausnehmung zu verschwenkt werden, und da der Mitnehmerstift federbelastet ist, kann er auf der Oberlfäche des Schlittens in den vorbestimmten Bereich bewegt werden, so daß er in die Ausnehmung einrastet, sobald er diese erreicht. Es spielt demnach keine Rolle, welche Stellung der Mitnehmerstift zu dem Schlitten gerade einnimmt, da er über die Bewegung des Fernbetätigungshebels in Eingriff mit dem Schlitten gebracht werden kann, sofern der Mitnehmerstift den vorbestimmten Bereich noch überstreichen kann. Das automatische Einrasten des Mitnehmerstiftes wird insbesondere dadurch auf einfache Weise bewirkt, daß er in Richtung auf die Ausnehmung vorgespannt wird.

Der Fernbetätigungshebel kann gemäß den Ansprüchen 6 bis 8 stets in eine Außerbetriebsstellung gebracht und in dieser gehalten werden, so daß durch eine ungewollte Bedienungsweise oder äußere Gewalteinwirkung, z. B. durch einen herabfallenden Gegenstand, keine Krafteinleitung auf den Mitnehmer und das Übertragungsglied stattfinden kann.

Schnellstmöglich wird ein Formschluß zwischen dem Mitnehmerstift und dem Schlitten hergestellt, wenn die Ausgangsstellung des Schlittens derart vorgegeben ist, daß die Bewegungsbahn des Mitnehmerstiftes auf kürzestem Weg mit der Ausnehmung in Deckung gerät.

Eine zweckmäßige Verwendungsmöglichkeit erfährt die erfindungsgemäße Fernbetätigungsvorrichtung, wenn sie für die Bedienung der Dreipunktgerätekupplung eines Ackerschleppers verwendet wird, wobei insbesondere dann, wenn die Bedienung der Dreipunktgerätekupplung von dem an den Ackerschlepper angebauten Gerät aus erfolgen kann, eine optimale Führung dieses Gerätes von einer sich auf dem Gerät befindlichen Person aus erfolgen kann. Ein derartiger Anwendungsfall ist etwa beim Führen einer Kartoffellegemaschine, einer Pflanzensetzmaschine, eines Kartoffelvollernters oder einer Hackmaschine sehr nutzbringend, da die auf einer derartigen Maschine sitzende Person besser und schneller als die den Ackeschlepper bedienende Person erkennen kann, ob die Maschine tiefer in den Boden hinein oder weiter aus diesem heraus gehoben werden muß, um eine bestmögliche Pflanzbedeckung oder einen geringstmöglichen Klutenanfall zu erreichen.

In der Zeichnung ist ein nachfolgend näher beschriebenes Ausführungsbeispiel der Erfindung dargestellt. Es zeigt:

Fig. 1 in schematischer Darstellung einen Ackerschlepper mit einer Fernbetätigungseinrichtung,
Fig. 2 die Fernbetätigungseinrichtung in einer Außerbetriebsstellung in Vorderansicht und im Schnitt und
Fig. 3 die Fernbetätigungseinrichtung in einer Betriebsstellung in Draufsicht und im Schnitt entlang der Linie 3 - 3 und in Blickrichtung der zugehörigen Pfeile in Fig. 2.

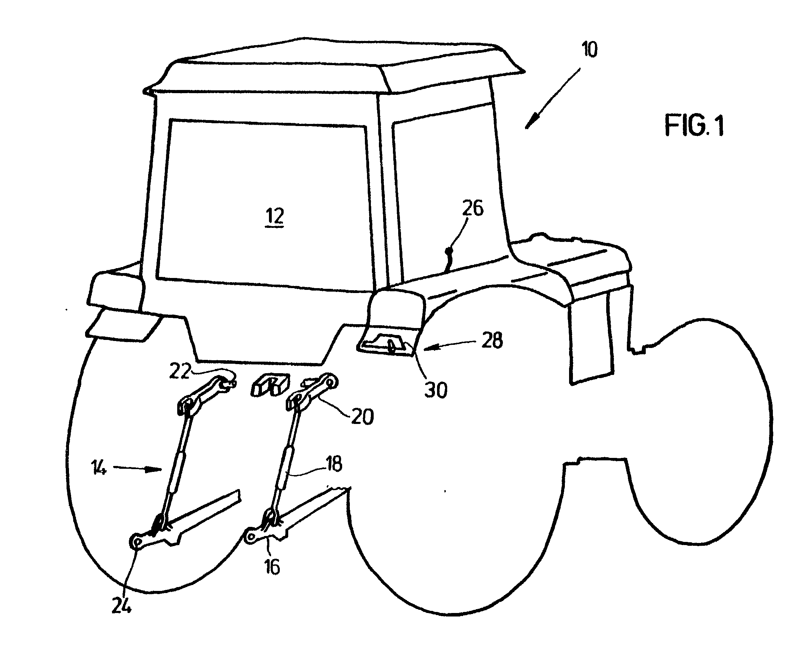

Ein in Fig. 1 mit seinen Umrissen angegebener Ackerschlepper 10 mit einer Kabine 12 ist an seinem rückwärtigen Ende mit einer Dreipunktgerätekupplung 14 versehen, mittels derer eine Verbindung zu einem anzuhängenden, jedoch nicht dargestellten Gerät hergestellt werden kann. Bei dem Gerät kann es sich um einen Pflug, eine Sämaschine, eine Egge oder eine sonstige Maschine handeln.

Die Dreipunktgerätekupplung 14 weist hierzu zwei untere Lenker 16 auf, die über Hubstreben 18 und Hubarme 20 mit einer Hubwelle 22 verbunden sind und geräteseitig Kugelösen 24 aufweisen. Die Hubwelle 22 selbst kann über einen nicht dargestellten, an ihr exzentrisch angreifenden Hubzylinder verdreht werden, während die unteren Lenker 16 um einen in der Zeichnung nicht ersichtlichen Federstab vertikal schwenden können. Die Schwenkbewegung wird dabei von der drehenden Hubwelle 22 bewirkt und über die Hubarme 20 und die Hubstreben 18 auf die unteren Lenker 16 übertragen. Ferner gehört zu der Dreipunktgerätekupplung 14 eine in die Zeichnung nicht aufgenommener oberer Lenker, über den das angehängte Gerät während des Schwenkvorgangs der unteren Lenker 16 in einer senkrechten oder annähernd senkrechten Lage gehalten wird.

Zur Steuerung der Drehung der Hubwelle 22 ist eine nicht gezeichnete Steuervorrichtung mit einem Steuerhebel 26 in der Kabine 12 in dem Ackerschlepper 10 vorgesehen, der außer durch den Steuerhebel 26 auch Impulse über den Federstab eingegeben werden können.

Der Steuervorrichtung ist eine ebenfalls nicht gezeigte Regelvorrichtung überlagert, die es ermöglicht, das angehängte Gerät mindestens analog einer Lageregelung und einer Zugwiderstandsregelung zu führen. Gegebenenfalls kann auch eine Mischung beider Regelarten, nämlich eine Mischregelung, vorgesehen sein. Hierbei bedeutet Lageregelung, daß das angehängte Gerät stets in der gleichen vertikalen Stellung gegenüber dem Ackerschlepper 10 gehalten wird, wobei diese über die Stellung des Steuerhebels 26 direkt bestimmt wird, so daß das angehängte Gerät stets die gleiche Arbeitstiefe beibehält. Zugwiderstandsregelung dagegen bedeutet, daß das angehängte Gerät stets eine Arbeitstiefe einhält, die einem bestimmten Zugwiderstand beim Ziehen durch den Boden entspricht. Der Zugwiderstand wird durch eine proportionale Verbiegung des Federstabes auf die Regelvorrichtung übertragen und bewirkt dort die Einleitung eines Hub- oder Senkvorganges der Dreipunktgerätekupplung 14.

Der Steuerhebel 26 ist in bekannter Ausführung in einer nicht dargestellten Kulisse geführt und innerhalb eines vorgegebenen Bereichs bewegbar. Ist als Regelungsart die Lageregelung gewählt, dann erfolgt proportional zu dem Verstellweg des Steuerhebels 26 in der Kulisse ein Anheben oder Absenken der unteren Lenker 16, und zwar so, daß sich die unteren Lenker 16 in ihrer untersten Stellung befinden, wenn der Steuerhebel 26 am vorderen Ende der Kulisse anliegt, und ihre oberste Stellung einnehmen, wenn sich der Steuerhebel 26 an dem rückwärtigen Ende der Kulisse befindet.

Hingegen unterteilt sich der Bereich in einen Leerbereich und in einen Regelbereich, wenn als Regelart die Zugwiderstandsregelung gewählt ist, wobei sich der Leerbereich von dem vorderen Ende der Kulisse und der Regelbereich von dem rückwärtigen Ende der Kulisse aus erstrecken. Eine Verstellung des Steuerhebels 26 in dem Leerbereich, solange die Zugwiderstandsregelung gewählt ist, bleibt ohne Wirkung auf die Dreipunktgerätekupplung 14. Eine Verstellung des Steuerhebels 26 in dem Regelbereich führt zu einem unkontrollierten Anheben bzw. Absenken der unteren nicht belasteten Lenker 16, da deren vertikale Schwenkbewegung in der Zugwiderstandsregelung fast ausschließlich in Abhängigkeit von den durch den Federstab oder ein sonstiges Zugwiderstandsübertragungsglied erfahrenen Impulsen erfolgt.

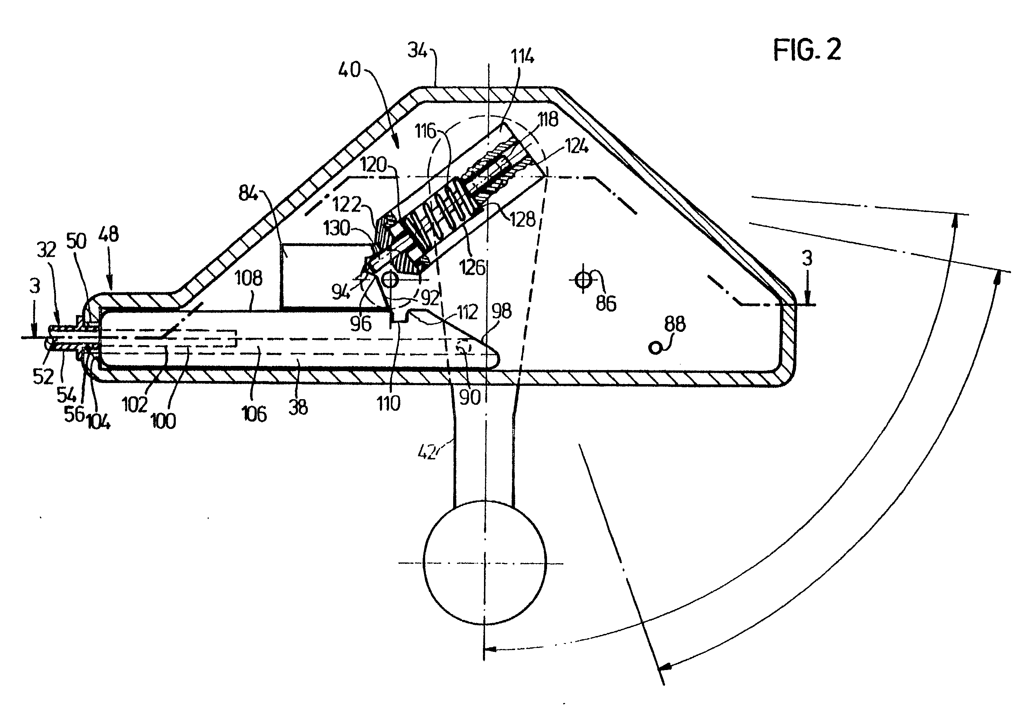

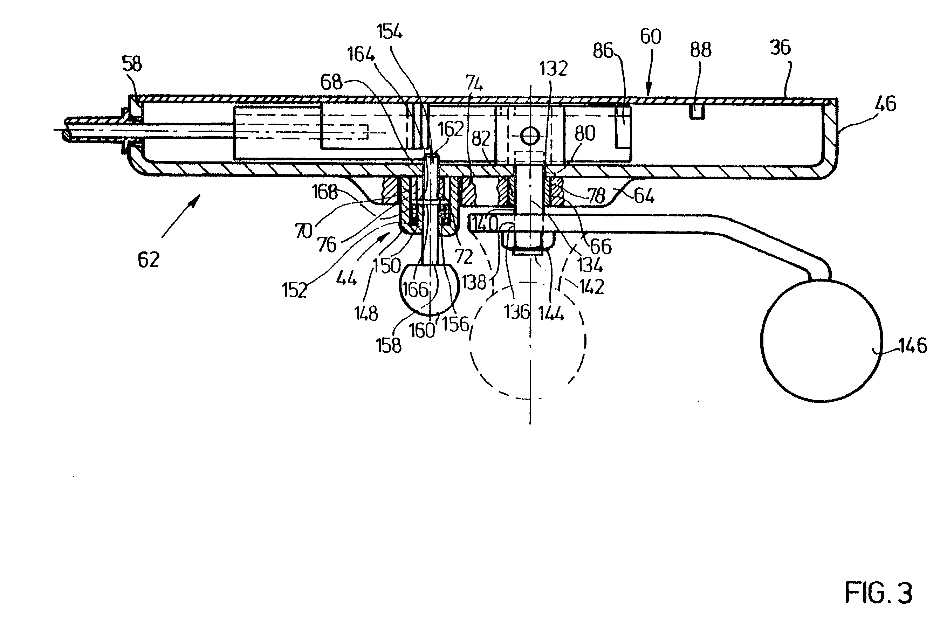

Schließlich ist in einem rückwärtigen Außenbereich 28 des Ackerschleppers 10 eine Fernbetätigungseinrichtung oder -vorrichtung 30 vorgesehen, die über einen Bowdenzug 32 oder ein sonstiges Gestänge mit dem Steuerhebel 26 verbunden ist und begrenztem Maße auf diesen eine Bewegung übertragen kann, so daß die unteren Lenker 16 der Dreipunktgerätekupplung 14 nicht nur von der Kabine 12 aus über den Steuerhebel 26 direkt, sondern auch von außerhalb der Kabine 12 mittelbar über die Fernbetätigungseinrichtung 30 angehoben bzw. abgesenkt werden können. Dies ist insbesondere wichtig, um die Höhe der unteren Lenker 16 auf die richtige Ankuppelhöhe beim Anhängen des Gerätes bringen zu können, was von der Kabine 12 aus unter Umständen sehr schwierig ist, aber sehr leicht durchgeführt werden kann, wenn eine die Dreipunktgerätekupplung 14 bedienende Person direkt neben dem anzuhängenden Gerät steht. Um jedoch zu vermeiden, daß über die Fernbetätigungseinrichtung 30 der Steuerhebel 26 in den Regelbereich bewegt wird, wenn als Regelart die Zugwiderstandsregelung gewählt ist, ist die Fernbetätigungseinrichtung 30 wie folgt und wie aus den Figuren 2 und 3 ersichtlich ausgebildet.

Die Fernbetätigungseinrichtung 30 setzt sich dementsprechend im wesentlichen zusammen aus einem Gehäuse 34, einem Deckel 36, einem Schlitten 38, einem Mitnehmer 40, einem Hebel 42 und einer Sperre 44.

Es wird darauf hingewiesen, daß sich der in fig. 2 gezeichnete Hebel 42 in Wirklichkeit mit Blickrichtung auf die Zeichnung vor dem Gehäuse 34 befindet und nur deshalb mit in die Zeichnung aufgenommen worden ist, um dessen relative Stellung gegenüber dem Schlitten 38 und dem Mitnehmer 40 aufzuzeigen.

Das Gehäuse 34 besteht aus einem formstabilen Kunststoff und nimmt die Form eines auf ein Rechteck aufgesetzten Trapezes ein, wobei die Breitseite des Trapezes auf dem Rechteck steht und das Rechteck sich einenends bis über das Trapez hinaus erstreckt. Das Gehäuse 34 weist einen Rand 46 auf, innerhalb dessen der Deckel 36, der Schlitten 38 und der Mitnehmer 40 angeordnet sind. Das Gehäuse 34 weist in seinem Endbereich des verlängerten Rechteckes 48 eine Öffnung 50 auf, durch welche sich ein Seilstück 52 des zuvor beschriebenen und mit dem Steuerhebel 26 verbundenen Bowdenzuges 32 erstreckt. Eine Hülle 54 des Bowdenzuges 32 ist über eine Schraubhülse 56 mit dem Gehäuse 34 starr verbunden und ermöglicht somit die Übertragung einer Zug- bzw. Drückebewegung. Der Bowdenzug 32, der Schlitten 38, das Seilstück 52, die Hülle 54 und die Schraubhülse 56 sind Bestandteile des Übertragungsgliedes bzw. des Gestänges. Der Rand 46 weist an seinem Innenumfang eine Falz 58 auf, die der formschlüssigen Aufnahme des Deckels 36 dient, so daß dieser stets in der gleichen Lage zu dem Gehäuse 34 gehalten wird. Die dieser Falz 58 zugelegene Seite des Gehäuses 34 stellt bei diesem Ausführungsbeispiel die Rückseite 60 des Gehäuses 34 dar. Auf einer dieser gegenüberliegenden Seite, also auf der Vorderseite 62, ist eine Gehäuseerhebung 64 vorgesehen, die eine Verstärkung des Gehäuses 34 bewirkt und in der eine Stufenbohrung 66 und eine Bohrung 68 vorgesehen sind, wobei die Bohrung 68 konzentrisch von einer Ringnut 70 umgeben ist und zwischen der Ringnut 70 und der Bohrung 68 eine Wandung 72 stehen bleibt. Die Ringnut 70 ist mit einem Innengewinde 74 versehen, und die Wandung 72 ist an zwei sich diametral gegenüberliegenden Stellen 76 durchbrochen. Die Stufenbohrung 66 weist einen Bereich großen und einen Bereich kleinen Durchmessers 78 und 80 auf, wobei der Bereich großen Durchmessers 78 der Vorderseite 62 und der Bereich kleinen Durchmessers 80 der Rückseite 60 zugelegen ist. In den Bereich großen Durchmessers 78 ist eine Lagerbüchse 82 eingesetzt, deren Innendurchmesser dem Innendurchmesser der Stufenbohrung 66 im Bereich kleinen Durchmessers 80 entspricht. Die Lagerbüchse 82 kann beispielsweise aus einem verschleißfesten Kunststoff oder aus Rotguß bestehen und schließt an der Vorderseite 62 bündig mit dem Gehäuse 34 ab.

Der Deckel 36, der ebenfalls aus einem formstabilen Kunststoff oder aus Blech hergestellt sein kann, weist die gleiche Form wie das Gehäuse 34 auf, ist in seinen Außenmaßen jedoch etwas geringer ausgebildet, damit er in die Falz 58 des Randes 46 paßt. Er ist relativ dünn ausgebildet und an seiner der Vorderseite 62 des Gehäuses 34 zugelege-nen Innenseite mit einem Halteelement 84, einem Anschlag 86 und zwei Führungsstiften 88 und 90 versehen, wobei sich das Halteelement 84 und der Anschlag 86 bis nahezu über die gesamte Höhe des Randes 46 und die beiden Führungsstifte 88, 90 über ca. ein Drittel des Randes 46 erstrecken. Das Halteelement 84, der Anschlag 86 und die Führungssrifte 88, 90 können auf den Deckel 36 aufgeklebt, aufgeschraubt oder mit diesem aus einem Stück hergestellt sein.

Das Halteelement 84 weist auf seiner in der Zeichnung rechten Seite, die dem Anschlag 86 zugelegen ist, eine Schräge 92 auf, die von einer Nut 94 unterbrochen wird. Die Nut 94 läuft auf der unteren Seite über eine Fase 96 in die Schräge 92 aus. Der Anschlag 86 kann in der Form eines Stiftes oder dergleichen ausgebildet sein und ist in seinem Querschnitt vorzugsweise rund. Die Führungsstifte 88, 90 sind ebenfalls in der Form eines Stiftes oder dergleichen ausgeführt. Sie können jedoch auch in der Art von Führungsschuhen ausgestaltet werden. Die Funktion der Führungsstifte 88, 90 wird weiter unten näher erläutert. Mit Bezug auf den in Figur 2 unten gelegenen Bereich des Randes 46 des Gehäuses 34 weisen die Nut 94 in dem Halteelement 84 und der Anschlag 86 den gleichen Abstand auf. Auch die beiden Führungsstifte 88, 90 liegen auf einer parallel zu diesem Bereich des Randes 46 gelgenen Linie. Der Deckel 36 und das Gehäuse 34 können entweder miteinander verklebt oder vergossen sein, oder sie können über Schrauben zusammengehalten werden. Die Art der Befestigung ist der Übersichtlichkeit wegen in der Zeichnung nicht dargestellt.

Wie insbesondere aus Figur 2 zu entnehmen ist, weist der Schlitten 38 den Querschnitt eines ungleichförmigen Trapezes mit abgerundeten Kanten auf. Seine Höhe entspricht der Innenabmessung des Gehäuses 34 im Enbereich des verlängerten Rechteckes 48, und seine Breite entspricht im wesentlichen der Höhe des Randes 46. Die Länge des Schlittens 38 reicht von dem linken Ende des verlängerten Rechteckes 48 bis ungefähr in die Mitte des Trapezes, projiziert auf das Rechteck. Sie ist insbesondere derart bemessen, daß sich der Schlitten 38 selbst dann noch unterhalb des Halteelementes 84 befindet, wenn er nicht mehr weiter nach rechts verschoben werden kann. Der in der Zeichnung rechte Endbereich des Schlittens 38 verläuft in einer Schräge 98, ausgehend von der unteren Kante in Richtung auf den Endbereich des verlängerten Rechteckes 48, und zwar unter einem Winkel von ca. 45 Grad. Vom in der Zeichnung linken Ende des Schlittens 38 bis ungefähr zu einem Drittel seiner Länge erstreckt sich eine Gewindebohrung 100, in die das Seilstück 52 des Bowdenzuges 32 eingeschraubt ist, wozu es endseitig mit einem Gewindestift 102 versehen ist. Bezogen auf eine von links sichtbare Stirnfläche 104 des Schlittens 38 ist die Gewindebohrung 100 im Schnittpunkt der beiden Diagonalen gelegen. Auf der dem Deckel 36 zugelegenen Seite des Schlittens 38 ist in diesen eine sich über seine ganze Länge erstreckende Führungsnut 106 eingefräst, die in ihrer Breite und Tiefe derart bemessen ist, daß sie die beiden Führungsstifte 88, 90 übergreifen kann. Durch das Zusammenwirken der beiden Führungsstifte 88, 90 und der Führungsnut 106 ergibt sich eine Längsführung des Schlittens 38, so daß dieser stets parallel zu dem unteren Rand 46 des Gehäuses 34 geführt wird. Der Schlitten 38 liegt mit seiner Oberseite 108 auch an dem Halteelement 84 an und wird auch von diesem während seiner Längsbewegung in dem Gehäuse 34 geführt. An der Oberseite 108 des Schlittens 38 ist eine sich quer über seine Breite erstreckende Ausnehmung oder Mitnehmernut 110 vorgesehen, die zu beiden Seiten über jeweils eine Fase 112 in die Oberseite 108 übergeht. Zwischen der der Schräge 98 zugelegenen Fase 112 und der Schräge 98 verbleibt eine kleine Fläche, die ungefähr der Breite der Mitnehmernut 110 entspricht. Die Tiefe der Mitnehmernut 110 entspricht ungefähr der Tiefe der Nut 94 in dem Halteelement 84.

Der Mitnehmer 40 ist aus einem Block 114, einer Druckfeder 116, einem Mitnehmerstift 118 und einer Scheibe 120 zusammengesetzt. Der Block 114 weist die Außenform eines Quaders auf, der an seinem unteren Ende über eine Kappe 122 verschlossen ist. Die Dicke des Blockes 114 entspricht ungefähr dem Abstand zwischen dem Deckel 36 und dem Gehäuse 34, also der Höhe des Randes 46. Der Block 114 ist in Richtung seiner Längsachse und mittig durchbohrt und weist somit eine zylindrische Führung 124 für den Mitnehmerstift 118 auf. Diese Führung 124 erstreckt sich auch durch die Kappe 122, so daß der Mitnehmerstift 118 einenends in dem Block 114 und anderenends in der Kappe 122 gleitend geführt ist. Zwischen der Kappe 122 und der Führung 124 ist eine Bohrung oder ein Durchbruch 126 von gegenüber der Führung 124 größerem Durchmesser vorgesehen, in die oder den die Druckfeder 116 eingesetzt ist. In einfachster Form kann, wenn es sich um einen Durchbruch 126 handelt, sich dieser von der dem Gehäuse 34 zugelegenen Seite bis zu der dem Deckel 36 zugelegenen Seite des Blockes 114 erstrecken, was am einfachsten durch einen Fräsvorgang erzielt werden kann.

An dem an die Führung 124 angrenzenden Ende der Bohrung 126 weist diese eine Anschlagfläche 128 auf. Der Mitnehmerstift 118 erstreckt sich also zwischen der Führung 124 in dem Block 114 und der Führung 124 in der Kappe 122 auch durch die Bohrung 126. Ungefähr auf einem Drittel seiner Länge, und zwar ausgehend von seinem der Kappe 122 zugelegenen Ende 130, ist auf dem Mitnehmerstift 118 die Scheibe 120 befestigt. Diese kann etwa auf dem Mitnehmerstift 118 angeschweißt sein oder in diesem in einer Ringnut gehalten werden, was jedoch nicht näher dargestellt ist. Zwischen der Scheibe 120 und der Anschlagfläche 128 ist die Druckfeder 116 unter Vorspannung eingesetzt und bewirkt somit, daß der Mitnehmerstift 118 immer in Richtung auf die Kappe 122 zubewegt wird, so daß das der Kappe 122 zugelegene Ende 130 des Mitnehmerstiftes 118 aus der Führung 124 der Kappe 122 herausgeschoben wird, bis die Scheibe 120 mit der der Druckfeder 116 abgewandten Seite an der Kappe 122 zur Anlage kommt. Wenn die Scheibe 120 an der Kappe 122 zur Anlage gekommen ist, steht der Mitnehmerstift 118 über die Kappe 122 um ein bestimmtes Maß vor, das mindestens der Tiefe der Mitnehmernut 110 entspricht. Vorzugsweise steht es aber um etwas mehr als die Tiefe der Mitnehmernut 110 über. Die Länge des Mitnehmerstifts 118 ist aber auch so ausgelegt, daß, selbst wenn die Scheibe 120 an der Kappe 122 zur Anlage kommt, der Mitnehmerstift 118 sich also in der dem Block 114 abgelegensten Stellung befindet, er in seinem dem Block 114 zugelegenen Endbereich noch in der Führung 124 gehalten ist.

Die Kappe 122 kann auf den Block 114 aufgeschraubt oder aufgeschweißt sein. Ist in dem Block 114 anstatt der Bohrung ein Durchbruch 126 vorgesehen und wird die Scheibe 120 auf dem Mitnehmerstift 118 mittels eines Spannstiftes oder eines Sicherungsringes gehalten, dann können die Kappe 122 und der Block 114 auch als ein Teil ausgebildet sein. In diesem Fall müßte zur Montage zunächst die Druckfeder 116 in den Durchbruch 126, dann die Scheibe 120 zwischen die Druckfeder 116 und den die Kappe 122 ersetzenden Teil des Blockes 114 geschoben werden. Anschließend könnte der Mitnehmerstift 118 von einer der Führungen 124 her durch die Druckfeder 116 und die Scheibe 120 hindurch geschoben, die Druckfeder 116 zu der Anschlagfläche 128 hin zusammengedrückt und die Scheibe 120 mittels des Spannstiftes oder dergleichen gegenüber dem Mitnehmerstift 118 gesichert werden.

Auf der der Vorderseite 62 des Gehäuses 34 zugelegenen Seite des Blockes 114 ist eine Gewindebohrung 132 zur Aufnahme eines zum Mitnehmer 40 gehörenden Verbindungsbolzens 134 vorgesehen. Diese Gewindebohrung 132 ist als Sackbohrung ausgebildet und verläuft senkrecht zu der Führung 124 in dem Block 114. Sie ist deshalb als Sackbohrung ausgebildet, damit ausgeschlossen ist, daß der Verbindungsbolzen 134 bis in die Führung 124 eingeschraubt werden kann und in dieser die Bewegung des Mitnehmerstiftes 118 verhindert. Anstatt der Verbindung mittels des Gewindes könnte jedoch auch der Verbindungsbolzen 134 auf den Block 114 aufgeschweißt oder mit diesem aus einem Teil gebildet sein.

Der Verbindungsbolzen 134 erstreckt sich von dem Block 114 aus durch das Gehäuse 34, und zwar durch die Lagerbüchse 82 hindurch und steht mit einem abgeflachten Schaftteil 136 über die Vorderseite 62 des Gehäuses 34 über. Entsprechend der Außenform des abgeflachten Schaftteils 136 quer zu seiner Längsachse ist in dem Hebel 42 eine Aussparung 138 vorgesehen, so daß dieser mit dem Verbindungsbolzen 134 im Bereich seiner Abflachung eine drehfeste Verbindung eingehen kann. Im Bereich des Überganges von dem abgeflachten zu dem nicht abgeflachten Bereich des Schaftteils 136 ergibt sich ein Anschlag 140, gegen den der Hebel 42 zur Anlage bringbar ist. Der Schaftteil 136 ist so lang ausgebildet, daß er, selbst wenn er von dem Hebel 42 umgriffen ist, noch mit einem Gewindeteil 142 über den Hebel 42 übersteht. Auf diesen Gewindeteil 142 wird eine Mutter 144 aufgeschraubt, mittels derer der Hebel 42 auf dem Schaftteil 136 durch seine Anlage an dem Anschlag 140 festlegbar ist. Der Fernbetätigungshebel bzw. Hebel 42 ist aus einem Flachstahl oder einem dicken Blech hergestellt und von länglicher Gestalt. An seinem dem Verbindungsbolzen 134 abgelegen Ende ist er mit einer Kugel 146 versehen, die auf ihn aufgesteckt oder aufgeschraubt ist und die ein bequemeres und leichteres Ergreifen des Hebels 42 ermöglicht. Durch die drehfeste Verbindung des Verbindungsbolzens 134 sowohl mit dem Block 114 wie auch mit dem Hebel 42 wird eine Schwenkbewegung des Hebels 42 in der Lagerbüchse 82 direkt auf den Block 114 übertragen und bewirkt dort ebenfalls dessen Verschwenken. Die Symmetrieachse des Hebels 42 und die des Blockes 114 verlaufen unter einem Winkel von ca. 45 Grad zueinander.

Die Sperre 44 setzt sich aus einer Gewindehülse 148 mit einer Innenbohrung 150, einer Feder 152, einem Sperrstift 154 und einer Platte 156 zusammen, wobei die Gewindehülse 148 das Gewinde auf dem Außenumfang trägt und in die mit dem Innengewinde versehene Ringnut 70 in der Vorderseite 62 des Gehäuses 34 einschraubbar ist. Der Außendurchmesser des Sperrstiftes 154 entspricht dem Innendurchmesser der Bohrung 68 in der Vorderseite 62 des Gehäuses 34 und wird daher während einer Schiebebewegung in Richtung seiner Längsmittenachse in dieser geführt. Auch der Innendurchmesser der Innenbohrung 150 ist nahezu identisch mit dem Außendurchmesser des Sperrstiftes 154. Die Länge des Sperrstiftes 154 ist derart bemessen, daß er sich ständig sowohl durch die Bohrung 68 wie auch durch die Innenbohrung 150 erstreckt und dann noch mit einem Stiftende 158 über die Gewindehülse 148 übersteht, wobei auf das Stiftende 158 ebenfalls eine Griffkugel 160 aufgeschraubt ist, die es erleichtert, den Sperrstift 154 axial zu verschieben.

Nach ungefähr einem Drittel seiner Länge, gemessen von dem in den Innenraum des Gehäuses 34 eintauchenden Ende 162, ist auf den Sperrstift 154 die Platte 156 aufgesetzt und auf diesem gehalten, beispielsweise dadurch, daß die Platte 156 als eine Spreizscheibe ausgebildet ist, die in eine auf dem Umfang des Sperrstiftes 154 eingearbeitete nicht dargestellte Nut einschiebbar ist. Die Platte 156 weist eine Innenseite 164 und eine Außenseite 166 auf, wobei als die Innenseite 164 diejenige betrachtet werden soll, die im eingebauten Zustand zu dem Gehäuse 34 hin zeigt, während als die Außenseite 166 diejenige betrachtet werden soll, die im eingebauten Zustand zu der Griffkugel 160 hin zeigt.

Zwischen der Platte 156 und dem geschlossenen Ende der Gewindehülse 148 ist die Feder 152 vorgesehen, die gemäß dem Vorbeschriebenen an der Außenseite 166 der Platte 156 anliegt. Die Platte 156 ist mit zwei Durchbrüchen 168 versehen, die der Größe und dem Querschnitt der auf der Vorderseite 62 des Gehäuses 34 angeordneten und die Bohrung 68 konzentrisch umgebenden Wandung 72 entsprechen. Wird der Sperrstift 154 und mit ihm auch die Platte 156 so gedreht, daß die Durchbrüche 168 mit der Wandung 72 fluchten, dann kann der Sperrstift 154 axial bewegt werden, und die Platte 156 gleitet auf der Wandung 72, wobei der Sperrstift 154 in Richtung auf das Gehäuse 34 durch die Feder 152 bewegt wird, während er in der entgegengesetzten Richtung von einer Person entgegen der Kraft der Feder 152 gezogen werden muß. Bei der Bemessung des Innendurchmessers der Feder 152 ist darauf zu achten, daß dieser größer ist als der Außendurchmesser der Wandung 72, damit sie bei der Axialbewegung des Sperrstiftes 154 auf das Gehäuse 34 zu nicht an der Wandung 72 zur Anlage kommt und somit verhindert, daß der Sperrstift 154 ausreichend weit in das Gehäuse 34 eintaucht.

Gemäß dem Vorbeschriebenen ergibt sich folgende Funktion. Die Funktionsbeschreibung geht davon aus, daß als Regelart die Zugwiderstandsregelung gewählt worden ist, daß der Steuerhebel 26 in der Kabine 12 eine Stellung eingenommen hat, die der tiefsten Stellung der unteren Lenker 16 entspricht, und daß über den Hebel 42 der Mitnehmer 40 so weit verschwenkt worden ist, daß der Mitnehmerstift 118 in der Nut 94 in dem Halteelement 84 zur Anlage kommt. Unter diesen Voraussetzungen wird sich der Schlitten 38 in dem Endbereich des verlängerten Rechtecks 48 befinden und an der in den Figuren linken inneren Stirnfläche zur Anlage kommen. Ferner nimmt die Sperre 44 einen Zustand ein, in dem die Platte 156 auf der Wandung 72 gleiten kann und durch die Wirkung der Feder 152 bis zur Anlage an der Vorderseite 62 des Gehäuses 34 gebracht wird. In dieser Stellung reicht der Sperrstift 154 so weit in das Gehäuse 34 hinein, daß er in die Bewegungsbahn des aus dem Block 114 reichenden Endes 130 des Mitnehmerstiftes 118 eingreift.

Unter diesen Voraussetzungen wird nun der Ackerschlepper 10 rückwärts von einer Person an ein anzuhängendes nicht gezeichnetes Gerät, beispielsweise an eine Scheibenegge, herangefahren. Sobald der Abstand zwischen dem Ackerschlepper 10 und der Scheibenegge ausreicht, um diese mit den unteren Lenkern 16 zu verbinden, wird der Ackerschlepper 10 angehalten und die unteren Lenker 16 so weit nach oben verfahren, daß die Kugelösen 24 etwa in der gleichen Höhe wie die Ankuppelpunkte an der Scheibenegge liegen. Insbesondere bei Ackerschleppern 10 mit einer Kabine 12, die die Einsicht des Ankuppelbereichs einschränkt, kann die Person oft nur schätzen, ob die Höhe der Kugelösen 24 der Höhe der Ankuppelpunkte an der Scheibenegge entspricht. Anschließend wird die Person von dem Ackerschlepper 10 absteigen und nach hinten gehen, um die unteren Lenker 16 mit den Kugelösen 24 über an der Scheibenegge vorgesehene Anhängebolzen zu schieben. Befinden sich die Kugelösen 24 nun unterhalb der Anhängebolzen, dann wird die Person über die Griffkugel 160 den Sperrstift 154 nach außen, d.h. in Richtung aus dem Gehäuse 34 haraus, ziehen, bis die Platte 156 die Wandung 72 nicht mehr übergreift. Anschließend wird der Sperrstift 154 ein wenig um seine Längsachse gedreht und losgelassen, so daß die Platte 156 unter der Wirkung der Feder 152 auf die Wandung 72 gedrückt wird, in eine Stellung also, in der Sperrstift 154 nicht mehr in die Bewegungsbahn des Mitnehmerstiftes 118 eingreift. Danach wird sie den Hebel 42 mit Blick auf Fig. 2 links herum verschwenken, so daß der Block 114 und der Mitnehmerstift 118 ebenfalls eine Drehbewegung entgegen dem Uhrzeigerdrehsinn durchführen. Diese Drehbewegung bewirkt eine axiale Verschiebung des Mitnehmerstiftes 118 weg von dem Halteelement 84 und aus der Nut 94 haraus, und zwar bedingt durch die seitlich an der Nut 94 vorgesehene Fase 96. Diese axiale Verschiebung erfolgt entgegen der Wirkung der Druckfeder 116, und der Mitnehmerstift 118 liegt nach dem Verlassen der Nut 94 reibend auf der Schräge 92 an. Nach einem bestimmten Schwenkmaß rastet der Mitnehmerstift 118 dann in die Mitnehmernut 110 in der Oberseite 108 des Schlittens 38 ein und verschiebt diesen von links nach rechts mit Blick auf die Zeichnung. Sobald der Schlitten 38 eine Längsbewegung in dem rechteckigen Bereich des Gehäuses 34 durchführt, wird über das Seilstück 52 des Bowdenzuges 32 diese auf den Steuerhebel 26 übertragen, der dann proportional verschwenkt wird. Der Schlitten 38 wird durch ein weiteres Verschwenken des Hebels 42 und somit auch des Mitnehmers 40 in der vorgenannten Drehrichtung so lange weiter bewegt, bis der Mitnehmerstift 118 sich wieder aus der Mitnehmernut 110 herausbewegt, was dann geschieht, wenn der maximale Aktionskreis des Mitnehmerstiftes 118 nicht mehr die Oberseite 108 des Schlittens 38 schneidet. Der Schlitten 38 ist dann so weit verschoben worden, daß der Steuerhebel 26 in der Kabine 12 über seinen gesamten Leerweg verschwenkt worden ist. Gemäß dem eingangs Beschriebenen erfolgt jedoch keine Anhebung der unteren Lenker 16, solange sich der Steuerhebel 26 in dem Leerbereich bewegt und als Regelart die Zugwiderstandsregelung gewählt ist. Es kann also nicht passieren, daß die Person den Steuerhebel 26 in den Regelbereich bringt und bewirkt, daß sich die unteren Lenker 16 unkontrolliert nach oben bewegen und dabei evtl. die Scheibenegge anheben und die Scheibenegge oder sogar die danebenstehende Person beschädigt bzw. verletzt werden. Die Person erkennt jedoch an dem nachlassenden Krafterfordernis zum Verschwenken des Hebels 42, daß ein Anheben der unteren Lenker 16 bei der gewählten Regelfunktion, nämlich der Zugwiderstandsregelung, nicht möglich ist. Ein endloses Weiterdrehen des Hebels 42 ist jedoch nicht möglich, da der Mitnehmerstift 118 an den Anschlag 86 des Deckels 36 anschlägt. Die Person muß nach alledem wieder auf den Ackerschlepper 10 aufsteigen und als Regelart die Lageregelung wählen, wobei sie, um zu vermeiden, daß die unteren Lenker 16 beim Wechsel der Regelungsart auf eine Höhe angehoben werden, die der Stellung des Steuerhebels 26 in der Kulisse beim Übergang von dem Leerbereich zu dem Regelbereich in der Lageregelung entspricht, den Steuerhebel mindestens so weit auf den Anfang der Kulisse zubewegen sollte, wie er sich befand, als die unteren Lenker 16 anfänglich von der Kabine 12 aus angehoben wurden.

Danach steigt die Person wieder ab und kann über den Hebel 42 nun den Steuerhebel 26 proportional und über nahezu seinen gesamten Schwenkweg verschwenken. Dieses Sicherheitsmerkmal, also das Verhindern des Anhebens der unteren Lenker 16, solange als Regelart die Zugwiderstandsregelung gewählt ist, wird dann überflüssig, wenn von vornherein als Regelart die Lageregelung gewählt worden war und dann jedes Verschwenken des Hebels 42 direkt das Anheben der unteren Lenker 16 bewirkt.

Nach der Beendigung der Fernbetätigung wird der Hebel 42 wieder in seine Ausgangsposition, d. h. in die Position zurückverschwenkt, in der der Mitnehmerstift 118 in der Nut 94 in dem Halteelement 84 gehalten ist, und der Sperrstift 154 in das Gehäuse 34 geschoben. Dies wird dadurch erreicht, daß der Sperrstift 154 um seine Längsachse so lange verdreht wird, bis die Durchbrüche 168 in der Platte 156 mit der Wandung 72 fluchten, so daß die Feder 152 den Sperrstift 154 in das Gehäuse 34 hineinschiebt. Die Sperre 44 dient nicht dazu, den Hebel 42 unter normalen Umständen in seinem Drehvermögen zu blockieren, was nämlich bereits durch das Einrasten des Mitnehmerstiftes 118 in die Nut 94 in dem Halteelement 84 erreicht wird, sondern sie verhindert, daß durch eine ungewollte äußere Krafteinwirkung, etwa durch einen herabstürzenden Gegenstand, der Hebel verschwenkt wird und ungewollt eine Verstellung der unteren Lenker 16 hervorruft.

Selbstverständlich müssen die eingangs der Funktionsbeschreibung genannten Voraussetzungen nicht vorliegen, sondern der Hebel 42 kann, sofern die Sperre 44 geöffnet ist, in jeder Stellung des Schlittens 38 verschwenkt und, solange sich der Bewegungsbereich des Mitnehmerstiftes 118 mit der Mitnehmernut 110 an irgendeiner Stelle deckt, in Formschluß mit dem Schlitten 38 gebracht werden. Der Mitnehmerstift 118 wird dann lediglich so lange auf der Oberfläche 108 des Schlittens 38 entlanggleiten, bis er in die Mitnehmernut 110 einrastet. Das Gehäuse 34 mit seinem gesamten Inhalt muß auch nicht unbedingt an dem Ackerschlepper 10, etwa an dessen rückwärtigem Kotflügel, angebracht sein. Es ist vielmehr auch von Nutzen, wenn es zusätzlich an dem angehängten Gerät angebaut werden kann, so daß nicht nur beim Ankuppeln des Gerätes die Höhe der unteren Lenker 16 bestimmt werden kann, sondern daß auch während des Einsatzes des Gerätes dieses von einer auf ihm befindlichen Person optimal gegenüber der Bodenoberfläche geführt werden kann. Dies wäre möglich beim Einsatz von Pflanz- oder Erntemaschinen.

Ferner könnte der Anschlag 86 weggelassen und das Gehäuse 34 derart in seiner Form geändert werden, daß der Block 114 mit dem Mitnehmerstift 118 noch weiter, und zwar endlos, verschwenkt werden kann, wenn der Schlitten 38 seine Stellung eingenommen hat, die der oberen Stellung der unteren Lenker 16 entspricht, und daß über die Schräge 92 an dem Halteelement 84 der Mitnehmerstift 118 wieder in die Nut 94 für die Außerbetriebsstellung, allerdings von der anderen Seite her, eingesetzt werden kann, was ebenfalls besonders vorteilhaft ist.

Der gesamte Schwenkbereich des Hebels 42 ist in Fig. 2 durch den inneren Teilkreisbogen und der Teil des Schwenkbereiches, in dem über den Hebel 42 der Schlitten 38 verschoben werden kann, durch den äußeren Teilkreisbogen gekennzeichnet.

**Patentansprüche**

1. Fernbetätigungsvorrichtung mit einem Fernbetätigungshebel (42), einem Übertragungsglied (32, 38) und einem Mitnehmer (40, 134), wobei
a) der Mitnehmer (40, 134) einer formschlüssigen Verbindung des Fernbetätigungshebels (42) mit dem Übertragungsglied (32, 38) dient,
b) das Übertragungsglied (32, 38) auf eine Steuervorrichtung wirkt, die ferner mittels eines Steuerhebels (26) betätigbar ist;
c) der Fernbetätigungshebel (42) in eine von der Bewegung des Übertragungsglieds (32, 38) unabhängige Stellung bringbar ist,
dadurch gekennzeichnet, daß
a) der Mitnehmer (40, 134) starr mit dem Fernbetätigungshebel (42) verbunden ist;
b) der Mitnehmer (40, 134) bzw. das Übertragungsglied (32, 38) mit einer Nut (110) bzw. einem in diese passenden Stift (118) versehen sind,
c) der Stift (118) und die Nut (110) in derselben Ebene auf jeweils einer Bewegungsbahn beweglich sind,
d) sich die Bewegungsbahn des Stifts (118) auf einem Teil des Bewegungsbereichs des Fernbetätigungshebels (42) mit der der Nut (110) deckt und diese miteinander in Eingriff bringbar sind.

2. Fernbetätigungsvorrichtung nach Anspruch 1, dadurch gekennzeichnet, daß das Übertragungsglied (32, 38) einen Schlitten (38) umfaßt, der eine einzige Ausnehmung (110) aufweist, in die der Mitnehmer (40, 134) einsetzbar ist.

3. Fernbetätigungsvorrichtung nach Anspruch 1, dadurch gekennzeichnet, daß der Mitnehmer (40, 134) einen federbelasteten Mitnehmerstift (118) aufweist, der in die Ausnehmung (110) einsetzbar ist.

4. Fernbetätigungsvorrichtung nach Anspruch 3, dadurch gekennzeichnet, daß der Mitnehmer (40, 134) eine Schwenk- und das Übertragungsglied (32, 38) eine Längsbewegung ausführen kann, innerhalb eines bestimmten Bereiches der Mitnehmer (40, 134) mit dem Übertragungsglied (32, 38) formschlüssig verbindbar ist, der Mitnehmer (40, 134) in eine Außerbetriebsstellung bringbar ist, in der er nicht in Eingriff mit dem Übertragungsglied (32, 38) steht, und aus dieser Außerbetriebsstellung heraus in jeder Stellung des Übertragungsgliedes (32, 38) mittels des federbelasteten Mitnehmerstiftes (118) in Eingriff mit dem Übertragungsglied (32, 38) bringbar ist.

5. Fernbetätigungsvorrichtung nach Anspruch 3, dadurch gekennzeichnet, daß der Mitnehmerstift (118) entgegen der Wirkung einer Druckfeder (116) in einem mit dem Fernbetätigungshebel (42) fest verbundenen Gehäuse (114) geführt, bewegbar und in Richtung auf die Ausnehmung (110) vorgespannt ist.

6. Fernbetätigungsvorrichtung nach einem oder mehreren der vorherigen Ansprüche, dadurch gekennzeichnet, daß ein Halteelement (84) vorgesehen ist, in das der Mitnehmerstift (118) entgegen der Wirkung der Druckfeder (116) einsetzbar ist, wenn sich der Fernbetätigungshebel (42) in seiner Außerbetriebsstellung befindet.

7. Fernbetätigungsvorrichtung nach einem oder mehreren der vorherigen Ansprüche, dadurch gekennzeichnet, daß eine Sperre (44) vorgesehen ist, die ein Austreten des Mitnehmerstiftes (118) aus dem Halteelement (84) verhindert.

8. Fernbetätigungsvorrichtung nach einem oder mehreren der vorherigen Ansprüche, dadurch gekennzeichnet, daß die Sperre (44) unter der Wirkung einer Feder (152) in eine in die Bewegungsbahn des Mitnehmerstiftes (118) eintretende Stellung bringbar ist.

9. Fernbetätigungsvorrichtung nach einem oder mehreren der Ansprüche 2 oder 6–8, dadurch gekennzeichnet, daß der Schlitten (38) eine Ausgangsstellung einnehmen kann und die Ausnehmung in dem Schwenkbereich des Mitnehmerstiftes (118) liegt, wenn sich der Schlitten (38) in seiner Ausgangsstellung befindet.

10. Verwendung einer Fernbetätigungsvorrichtung nach einem oder mehreren der Ansprüche 1 bis 9 für die Fernbetätigung eines Steuerhebels (26) einer Dreipunktgerätekupplung (14) eines Ackerschleppers (10).

11. Verwendung einer Fernbetätigungsvorrichtung nach einem oder mehreren der Ansprüche 1 bis 9 für die Fernbetätigung eines Steuerhebels (26) einer Dreipunktgerätekupplung (14) eines Ackerschleppers (10).

11. Fernbetätigungsvorrichtung nach einem oder mehreren der Ansprüche 1 bis 9, dessen Übertragungsglied (32, 38) ein bewegliches Gestänge (32), insbesondere einen Bowdenzug, enthält, das mit dem Steuerhebel (26) verbunden ist und das sich zwischen dem Steuerhebel (26) und einem an einen Ackerschlepper (10) angebauten Gerät erstreckt.

12. Fernbetätigungsvorrichtung nach Anspruch 11, dadurch gekennzeichnet, daß die Fernbetätigungsvorrichtung wahlweise und über Schnellverbindungsmittel mit dem Ackerschlepper (10) oder dem Gerät verbindbar ist.

## Claims

1. Remote control device with a remote controller (42), a transmission member (32, 38) and a follower (40, 134), wherein
   a) the follower (40, 134) serves for an interlocking connection of the remote control lever (42) with the transmission member (32, 38),
   b) the transmission member (32, 38) acts on a control device, which is further operable by means of a control lever (26);
   c) the remote control lever (42) can be brought into a position independent of the movement of the transmission member (32, 38),
characterized in that
   a) the follower (40, 134) is rigidly connected to the remote control lever (42);
   b) the follower (40, 134) and the transmission member (32, 38) are provided one with a groove (110) and one with a rod (118) fitting therein,
   c) the rod (118) and the groove (110) are movable in the same plane on respective movement paths,
   d) the movement path of the rod (118) registers in one part of the range of movement of the remote control lever (42) with that of the groove (110) and these can be brought into engagement with each other.

2. Remote control device according to claim 1, characterized in that the transmission member (32, 38) comprises a slider (38) which has a single recess (110), into which the follower (40, 134) can be inserted.

3. Remote control device according to claim 1, characterized in that the follower (40, 134) has a spring-loaded follower rod (118), which can be fitted in the recess (110).

4. Remote control device according to claim 3, characterized in that the follower (40, 134) can execute a pivotal movement and the transmission member (32, 38) can execute a longitudinal movement, within a predetermined range the follower (40, 134) can be interlocked with the transmission member (32, 38), [the follower] (40, 134) can be brought into an inoperative position, in which it is not in engagement with the transmission member (32, 38), and can be brought out of this inoperative position in any position of the transmission member (32, 38) into engagement with the transmission member (32, 38), by means of the spring-loaded follower rod (118).

5. Remote control device according to claim 3, characterized in that the follower rod (118) is movable, guided against the action of a compression spring (116) into a housing (114) fast with the remote control lever (42) and biased in the direction of the recess (110).

6. Remote control device according to one or more of the preceding claims, characterized in that there is provided a retaining element (84), into which the follower pin (118) can be introduced against the action of the compression spring (116), when the remote control lever (42) is located in its inoperative position.

7. Remote control device according to one or more of the preceding claims, characterized in that there is provided a latch (44) which prevents the follower rod (118) coming out of the retaining element (84).

8. Remote control device according to one or more of the preceding claims, characterized in that the latch (44) can be brought under the action of a spring (152) into a position in the path of movement of the follower rod (118).

9. Remote control device according to one or more of claims 2 or 6–8, characterized in that the slider (38) can assume an end position and the recess lies in the pivoting range of the follower rod (118) when the slider (38) is located in its end position.

10. Use of a remote control device according to one or more of claims 1 to 9 for the remote control of a control lever (26) of a three-point hitch (14) of an agricultural tractor (10).

11. Remote control device according to one or more of claims 1 to 9, whose transmission member (32, 38) comprises a movable linkage (32), especially a Bowden cable, which is connected to the control lever (26) and which extends between the control lever (26) and an implement attached to an agricultural tractor (10).

12. Remote control device according to claim 11, characterized in that the remote control device can be connected selectively and through quick connecting means to the agricultural tractor (10) or the implement.

## Revendications

1. Dispositif de télécommande comportant un levier de télécommande (42), un organe de transmission (32, 38), et un organe d'entraînement (40, 134),
   a) l'organe d'entraînement (40, 134) étant utilisé pour établir une liaison, par complémentarité de formes, du levier de télécommande (42) avec l'organe de transmission (32, 38),
   b) l'organe de transmission (32, 38) agit sur un dispositif de commande, qui peut en outre être actionné à l'aide d'un levier de commande (26);
   c) le levier de télécommande (42) peut être amené dans une position indépendante du déplacement de l'organe de transmission (32, 38),
caractérisé par le fait que
   a) l'organe d'entraînement (40, 134) est relié de façon rigide au levier de télécommande (42);
   b) l'organe d'entraînement (40, 134) ou l'organe de transmission (32, 38) sont équipés respectivement d'une rainure (110) et d'une tige (118) pénétrant de façon adaptée dans cette rainure,
   c) la tige (118) et la rainure (110) sont déplaçables dans le même plan sur des trajectoires respectives de déplacement,
   d) la trajectoire de déplacement de la tige (118) coïncide avec celle de la rainure (110) sur une partie de la zone de déplacement du levier de télécommande (42) et la tige et la rainure peuvent être amenées réciproquement en prise.

2. Dispositif de télécommande selon la revendication 1, caractérisé en ce que l'organe d'actionnement (32, 38) comporte un coulisseau (38) qui possède un seul évidement (110), dans lequel l'organe d'entraînement (40, 134) peut être inséré.

3. Dispositif de télécommande selon la revendication 1, caractérisé en ce que l'organe d'entraînement (40, 134) possède une tige d'entraînement (118), qui est chargée par un ressort et peut être insérée dans l'évidement (110).

4. Dispositif de télécommande selon la revendication 3, caractérisé en ce que l'organe d'entraînement (40, 134) peut exécuter un mouvement de pivotement et que l'organe de transmission (32, 38) peut exécuter un déplacement longitudinal, qu'à l'intérieur d'une zone déterminée, l'organe d'entraînement (40, 134) peut être réuni selon une liaison par complémentarité de formes à l'organe de transmission (32, 38), peut être amené dans une position hors service, dans laquelle il n'engrène pas avec l'organe de transmission (32, 38), et peut être amené, à partir de cette position hors service, et ce pour toute position de l'organe de transmission (32, 38), à engrener avec ce dernier, au moyen de la tige d'entraînement (118) chargée par un ressort.

5. Dispositif de télécommande selon la revendication 3, caractérisé en ce que la tige d'entraînement (118) peut être déplacée à l'encontre de l'action d'un ressort de pression (116) en étant guidée dans un logement (114) relié rigidement au levier de télécommande (42), et précontrainte en direction de l'évidement (110).

6. Dispositif de télécommande selon une ou plusieurs des revendications précédentes, caractérisé en ce qu'il est prévu un élément de retenue (84), dans lequel la tige d'entraînement (118) peut être insérée à l'encontre de l'action du ressort de pression (116), lorsque le levier de télécommande (42) est situé dans sa position hors service.

7. Dispositif de télécommande selon une ou plusieurs des revendications précédentes, caractérisé en ce qu'il est prévu un cliquet de blocage (44), qui empêche la tige d'entraînement (118) de sortir de l'élément de retenue (84).

8. Dispositif de télécommande selon une ou plusieurs des revendications précédentes, caractérisé en ce que le cliquet de blocage (44) peut être amené, sous l'action d'un ressort (152) dans une position dans laquelle le dispositif s'engage dans la voie de déplacement de la tige d'entraînement (118).

9. Dispositif de télécommande selon une ou plusieurs des revendications 2 ou 6-8, caractérisé en ce que le coulisseau (38) peut prendre une position de départ, et l'évidement est situé dans la zone de pivotement de la tige d'entraînement (118) lorsque le coulisseau (38) est situé dans sa position initiale.

10. Utilisation d'un dispositif de télécommande selon une ou plusieurs des revendications 1 à 9, pour la télécommande d'un levier de commande (26) d'un dispositif d'attelage à trois points (14) d'un tracteur agricole (10).

11. Dispositif de télécommande selon une ou plusieurs des revendications 1 à 9, dont l'organe de transmission (32, 38) contient une tringlerie mobile (32), notamment un câble Bowden, qui est reliée au levier de commande (26) et s'étend entre le levier de commande (26) et un appareil raccordé à un tracteur agricole (10).

12. Dispositif de télécommande suivant la revendication 11, caractérisé en ce que le dispositif de télécommande peut être relié au choix et par l'intermédiaire de moyens de liaison rapide, au tracteur agricole (10) ou à l'appareil.

FIG.1

EP 0 210 426 B1

FIG. 2

FIG. 3

EP 0 210 426 B1